Europäisches Patentamt

European Patent Office

Office européen des brevets

(11) Publication number: **0 324 326**
**A1**

## (12) EUROPEAN PATENT APPLICATION

(21) Application number: **88850431.3**

(22) Date of filing: **20.12.88**

(51) Int. Cl.⁴: **G09F 19/16**

(30) Priority: **11.01.88 SE 8800051**

(43) Date of publication of application:
**19.07.89 Bulletin 89/29**

(84) Designated Contracting States:
**AT BE CH DE ES FR GB GR IT LI NL**

(71) Applicant: **DIALECTICA AB**
**Skänegatan 87**
**S-116 37 Stockholm(SE)**

(72) Inventor: **Naeve, Ambjörn**
**Skanegatan 87**
**S-116 37 Stockholm(SE)**

(74) Representative: **Omming, Allan**
**A. OMMING & CO. AB Sveavägen 28-30**
**S-111 34 Stockholm(SE)**

(54) **A display device.**

(57) A display or presentation device, e.g. for advertising purposes, comprising two parabolic mirrors (11,12) whose reflective surfaces face one another and in which the focus of one mirror (11,12 respectively) is located in the central part of the other mirror (12,11 respectively).

For the purpose of producing a certain visual effect, each of the mirrors (11 and 12) has a respective aperture (111 and 121) provided centrally thereof. One of the apertures (111) is intended to receive an object (13) therein, optionally a movable object, and the other aperture (121) is intended for the presentation of a true image (14) of the object.

A planar glass sheet (30) may be placed adjacent the other aperture (121) or between the two mirrors (11,12).

In order to provide a longer movement path for the image (14), the device may include two or more pairs of parabolic mirrors (11-12; 51-52) positioned with a common centre line of the respective foci (110,120,510,520) of the mirrors.

Fig. 3

## A display device

### Field of invention

The present invention relates to a display device, e.g. for advertising purposes, comprising two parabolic mirrors whose reflecting surfaces face one another and which are so spaced apart that the focus of one mirror lies in the central part of the remaining mirror.

### Background Prior Art

Known to the prior art is a device which comprises a bowl-shaped parabolic mirror placed on a horizontal support surface. The mirror of this known device lacks a central aperture and the reflective surface of the mirror faces upwards. Positioned above the mirror is a further parabolic mirror which is configured with a central aperture and the reflective surface of which faces downwards. When an object is placed in the bottom of the bowl-shaped mirror and the extension of the object is not greater than said object can be said to be located "in the proximity of" the focal point of the other mirror, there will be obtained a true image of the object in the aperture in said other mirror.

With a device of this kind, only a small object or article can be placed in the bowl-shaped mirror. Furthermore, the arrangement of moving objects to provide certain visual effects is a complicated procedure. Since such movement - if it desired to realize the advantages afforded thereby - must be effected from one side, it is impossible to hide the ancillary devices required to effect said movement from a person viewing the device.

The object of the invention is, inter alia, to eliminate the aforesaid and other possible disadvantages of prior art display devices of this kind.

### Summary of the Invention

This object is achieved in accordance with the invention with a display or presentation device of the aforesaid kind in which both mirrors have an aperture provided in respective central parts thereof, and in which one of these apertures is intended to receive the object for display and the other is intended to present a true image of the object. These and other characteristic features of a display device constructed in accordance with the invention are seth forth in the following claims.

### Brief Description of the Drawings

The invention will now be described in more detail with reference to the accompanying schematic drawings, in which

Figure 1 illustrates the beam path in two parabolic mirrors with a punctiform object in the focus of one mirror and an image in the focus of the other mirror;

Figure 2 illustrates the beam path of Figure 1 with the punctiform object spaced from said focus and the true image spaced outside the focus of the other mirror;

Figure 3 illustrates the combination of thr mirrors according to Figures 1-2 adjacent a planar glass sheet;

Figure 4 illustrates the combination of the mirrors according to Figures 1-2, but with a planar glass sheet disposed between the mirrors;

Figure 5 illustrates a combination of two pairs of mirrors according to Figures 1-2; and

Figure 6 illustrates an example of various illumination alternatives.

### Description of Preferred Embodiments

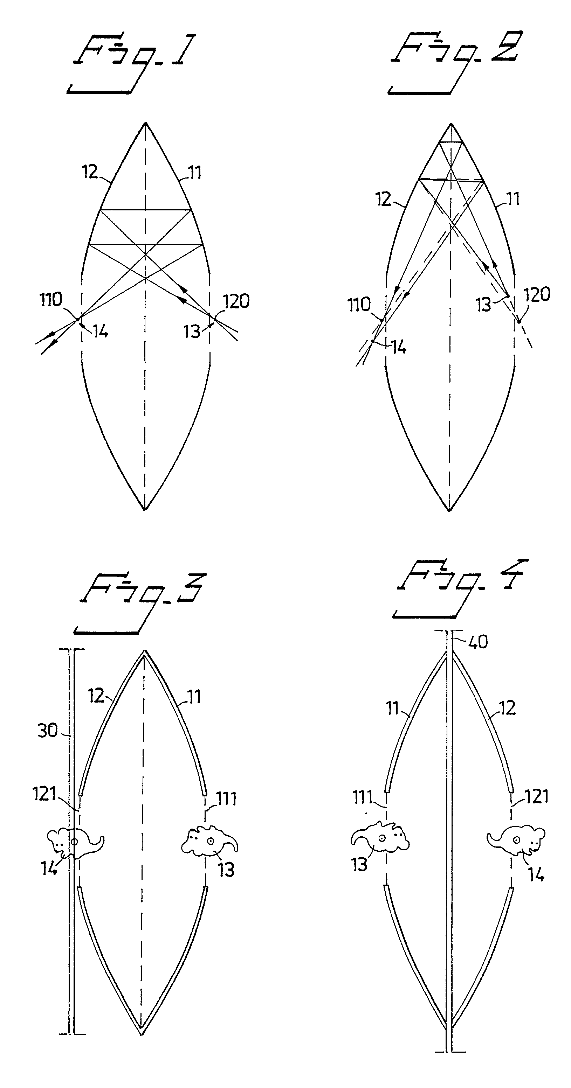

Figure 1 illustrates two parabolic mirrors 11,12, the reflective surfaces of which face one another and the circular peripheries of which lie edge to edge. It is imagined that a punctiform light source 13 (the object) is placed in the focus 120 of the mirror 12, this light source producing an image 14 in the focus 110 of the other mirror 11.

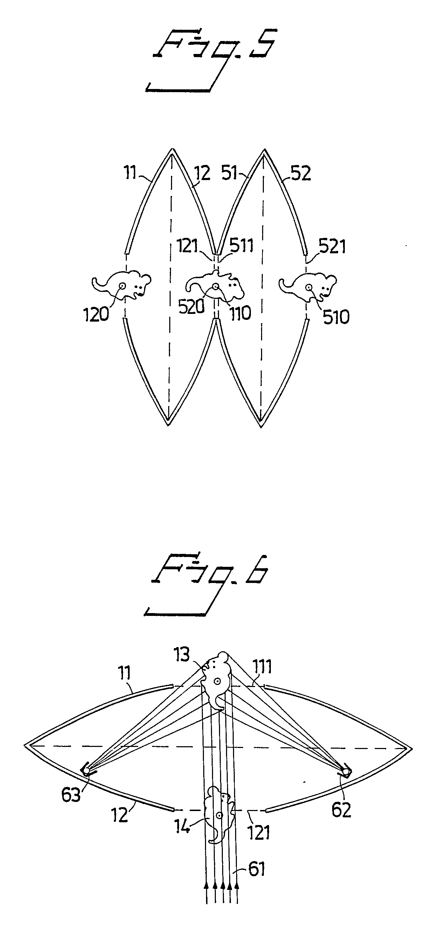

Figure 2 also illustrates the mirrors 11,12, but with the light source 13 (the object) remote from the focus 120 (displaced obliquely upwards) such that the image 14 is also slightly displaced (obliquely downwards) from the focus 110 of the other mirror.

Figure 3 illustrates a device in which a combination of mirrors 11,12 is placed adjacent a planar glass sheet 30. The sheet, or plate, may form part of a box or a display window. When a mobile object 13 is arranged in the aperture 111 of the mirror 11, there is obtained in or in the vicinity of the aperture 121 of the mirror 12 an image 14 which will appear to move out of or forwards and backwards through the glass sheet 30.

In the case of the embodiment illustrated in Figure 4, the mirrors 11 and 12 are placed on respective sides of a flat glass sheet or plate 40. The effect here is similar to that obtained in Figure 3, namely that the image 14 in the aperture 121 of the mirror 12 will appear to move out of and into said mirror.

In the case of the Figure 5 embodiment, a combination of mirrors 11-12 is coupled with an identical combination of mirrors 51-52, such that the foci 110,120,510,520 of respective mirrors will lie on one and the same straight line, and so that the other aperture 121 of the combination 11-12 will lie immediately adjacent the one aperture 511 of the combination 51-52.

With this embodiment the image will be moved twice the distance compared with the effect obtained when using a single combination of mirrors.

Three "series connected" mirror combinations will afford thrice the distance achieved with a single mirror combination.

Although each additional mirror combination will result in a small power loss in light intensity, it is thought that this loss can be compensated for by increased illumination.

Alternatively, the combination of mirrors can be made twice or three times as large, although this solution would be encumbered with significant drawbacks, for obvious reasons.

Figure 6 illustrates the combination of mirrors 11 and 12 and an object 13 in the aperture 111 of the mirror 11 and an image 14 in the aperture 121 of the mirror 12.

A spotlight located at a long distance from and centrally in relation to the mirror combination 11-12 produces a collimated light beam 61 towards the object 13, which therefore gives rise to the image 14.

It is also conceivable to position a screened light source 62 adjacent the inner surface of the mirror 12, to the right of the object 13, or a similar screened light source 63 adjacent the inner surface of the mirror 12, to the left of the object 13, or optionally a combination of all three light sources 61,62,63. The choice of illumination will depend on the geometry of the object. It is important that the light source(s) is(are) positioned and screened in a manner such that only the object 13 itself will be illuminated and not the actual mirror 11.

With regard to the aforementioned movement effect, it is a simple matter to effect movement of the object 13 in relation to the aperture 111 with the aid of separate movement generating means disposed above the object and therewith obtain a corresponding movement of the image 14 in relation to the aperture 121.

The mirrors may be made of plexiglass with a steam-vaporized aluminium layer on the rear side thereof (so-called mirror-plex or mirror-acryl), or of pressure-turned aluminium sheet with an eloxalated mirror surface.

## Claims

1. A display or presentation device, comprising at least one pair of parabolic mirrors whose reflective surfaces face one another and which are so spaced apart that the focus of the mirror will lie in the central part of the remaining mirror, **characterized** in that each of the mirrors (11,12) has an aperture disposed centrally thereof; and in that the one aperture (111) is intended to receive an object (13) therein and the other (121) of said apertures is intend to present therein a true image (14) of the object (13).

2. A device according to Claim 1, **characterized** in that it includes a planar glass sheet (30) whch is arranged immediately adjacent the second aperture (121).

3. A device according to Claim 1, **characterized** in that it includes a planar glass sheet (40) arranged between the two parabolic mirrors (11,12).

4. A device according to any of Claims 1-2, **characterized** in that said device comprises a combination of two pairs of parabolic mirrors (11,12; 51,52) which are so positioned that the foci of respective mirrors lie on one and the same straight line; and in that the said other aperture (121) of one of said mirror pairs (11,12) is located immediately adjacent the one aperture (511) of the other pair of parabolic mirrors (51,52).

Fig. 1

Fig. 2

Fig. 3

Fig. 4

EP 0 324 326 A1

Fig. 5

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 5, no. 173 (P-87)[845], 5th November 1981; & JP-A-56 101 118 (MITSUBISHI DENKI K.K.) 13-08-1981 * Abstract * | 1-3 | G 09 F 19/16 |
| A | IDEM. | 4 | |
| A | FR-A-2 345 970 (MONSHOUWER-LEARPONG) * The whole document * | 1-4 | |

TECHNICAL FIELDS SEARCHED (Int. Cl.4)

G 09 F

The present search report has been drawn up for all claims

| Place of search | Date of completion of the search | Examiner |
|---|---|---|
| THE HAGUE | 23-03-1989 | GALLO G.G. |